# EUROPEAN PATENT APPLICATION

(11) **EP 3 567 865 A1**
(43) Date of publication of application: **13.11.2019**
(21) Application number: 18871822.5
(22) Date of filing: 09.05.2018
(51) Int. Cl.: H04N 21/475, H04N 21/4788

(54) **METHOD AND SYSTEM FOR PROCESSING ON-SCREEN COMMENT INFORMATION**

(30) Priority: 29.03.2018 CN 201810273418
(71) Applicant: Wangsu Science & Technology Co., Ltd., Shanghai 200030 (CN)
(72) Inventor: ZHOU, Jian, Shanghai 200030 (CN); LIN, Tumu, Shanghai 200030 (CN); ZHAO, Zhiwen, Shanghai 200030 (CN)
(74) Representative: Hanna Moore + Curley
(86) International application number: PCT/CN2018/086183
(87) International publication number: WO 2019/184054

(57) **Abstract**

The present disclosure describes a method and system for processing bullet screen messages. The method includes: obtaining a current bullet screen message, and extracting to-be-analyzed textual content from the current bullet screen message; identifying an emotion feature represented by the textual content; and determining an execution strategy matching the identified emotion feature, and processing the current bullet screen message according to the execution strategy. The method and system for processing bullet screen messages provided by the present disclosure may improve accuracy of the detection of undesirable bullet screen messages.

## Description

### FIELD OF THE DISCLOSURE

The present disclosure generally relates to the field of Internet technology and, more particularly, relates to a method and system for processing bullet screen messages.

### BACKGROUND

With the continuous development of Internet technology, live streaming has become more and more popular. Users who watch a live stream may post bullet screen messages, which may be then viewed by other users who watch the live stream at the same time, thereby facilitating communication between the users.

Currently, there may be undesirable comments in the posted bullet screen messages. In order to audit the bullet screen messages posted by users, it is generally possible to detect the bullet screen messages posted by the users through sensitive words recognition. Once a bullet screen message is detected to contain undesirable sensitive words, the bullet screen message may be processed. However, the current methods of detecting bullet screen messages are too simple. If a user's undesirable bullet screen message does not contain sensitive words, this undesirable bullet screen message may not be detected.

### BRIEF SUMMARY OF THE DISCLOSURE

The objective of the present disclosure is to provide a method and system for processing bullet screen messages, which may improve accuracy of the detection of undesirable bullet screen messages.

To achieve the above objective, in one aspect, the present disclosure provides a method for processing bullet screen messages. The method includes: obtaining a current bullet screen message, and extracting to-be-analyzed textual content from the current bullet screen message; identifying an emotion feature represented by the textual content; and determining an execution strategy matching the identified emotion feature, and processing the current bullet screen message according to the execution strategy.

To achieve the above objective, in another aspect, the present disclosure further provides a system for processing bullet screen messages. The system includes: a textual content extraction unit that is configured to obtain a current bullet screen message and extract to-be-analyzed textual content from the bullet screen message; an emotion feature identification unit that is configured to identify an emotion feature represented by the textual content; and a processing unit that is configured to determine an execution strategy that matches the identified emotion feature and process the bullet screen message according to the execution strategy.

As can be seen from the above, the technical solutions provided by the present disclosure may detect the emotion feature of a bullet screen message when detecting the bullet screen messages. Specifically, the emotion feature of a bullet screen message may be detected by two approaches: emotion word matching or emotion prediction model. Here, when the emotion word matching-based approach is used for detection, the textual content of a bullet screen message may be split into multiple words, and emotion words may be identified from the split words. Each emotion word may be then assigned a weight value, so that the emotion feature value of the textual content may be obtained. An emotion feature corresponding to the emotion feature value may be the emotion feature represented by the bullet screen message. When the emotion prediction model-based approach is used for detection, the emotion prediction model may be trained through a large number of training samples. When a bullet screen message needs to be detected, the textual content of the bullet screen message may be input into the emotion prediction model, and the output result may be considered as the emotion feature represented by the bullet screen message. It can be seen from the above that, by analyzing the emotion features of bullet screen messages, the present disclosure may detect bullet screen messages with negative emotions, thereby improving accuracy of the detection of undesirable bullet screen messages.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a flowchart of a method for processing bullet screen messages according to some embodiments of the present disclosure;
FIG. 2 is a flow diagram of a process with two applications (a dictionary analysis method and a machine learning method) according to some embodiments of the present disclosure;
FIG. 3 is a flow diagram of a dictionary analysis method according to some embodiments of the present disclosure;
FIG. 4 is a flow diagram of a machine learning method according to some embodiments of the present disclosure; and
FIG. 5 is a schematic structural diagram of a computer terminal according to some embodiments of the present disclosure.

### DETAILED DESCRIPTION

To make the objectives, technical solutions, and advantages of the present disclosure clearer, specific embodiments of the present disclosure will be made in detail with reference to the accompanying drawings.

### Embodiment 1

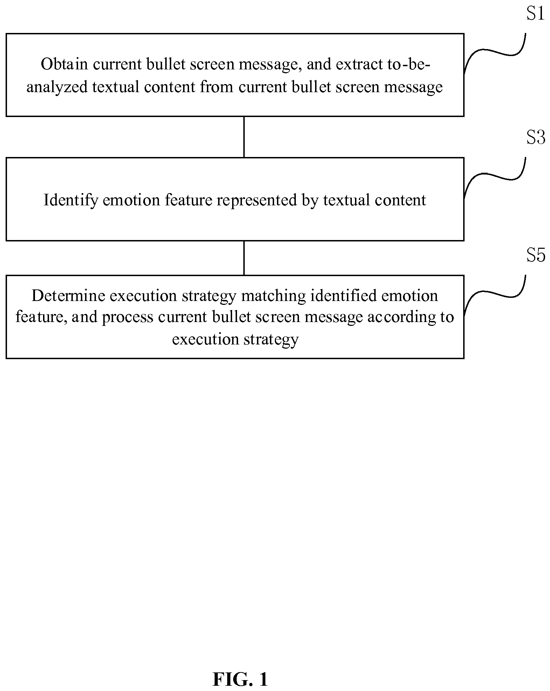

Referring to FIG. 1, the present disclosure provides a method for processing bullet screen messages. The method includes the following steps.

S1: Obtain a current bullet screen message, and extract to-be-analyzed textual content from the bullet screen message.

In the disclosed embodiments, the current bullet screen message may be a bullet screen message posted in a live video broadcast room. The obtained bullet screen message may include textual content of the bullet screen message, the time when the bullet screen message is posted, and the identity of a user who posts the bullet screen message. In order to detect the bullet screen message, to-be-analyzed textual content may be extracted from the bullet screen message. The textual content may be bullet screen text sent by the user.

In the disclosed embodiments, the textual content may also include certain text format information. The text format may be, for example, a natural language compatible format. In this way, the textual content conforming to the natural language format may be semantically evaluated subsequently.

S3: Identify an emotion feature represented by the textual content.

In the disclosed embodiments, after the textual content is extracted, the emotion feature represented by the textual content may be identified. The emotion feature may indicate an emotion trend of the textual content. If the textual content has a strong negative emotion, the textual content may be considered as undesirable textual content. In this way, by identifying the emotion feature of the textual content, it may be determined whether the current bullet screen message is an undesirable bullet screen message.

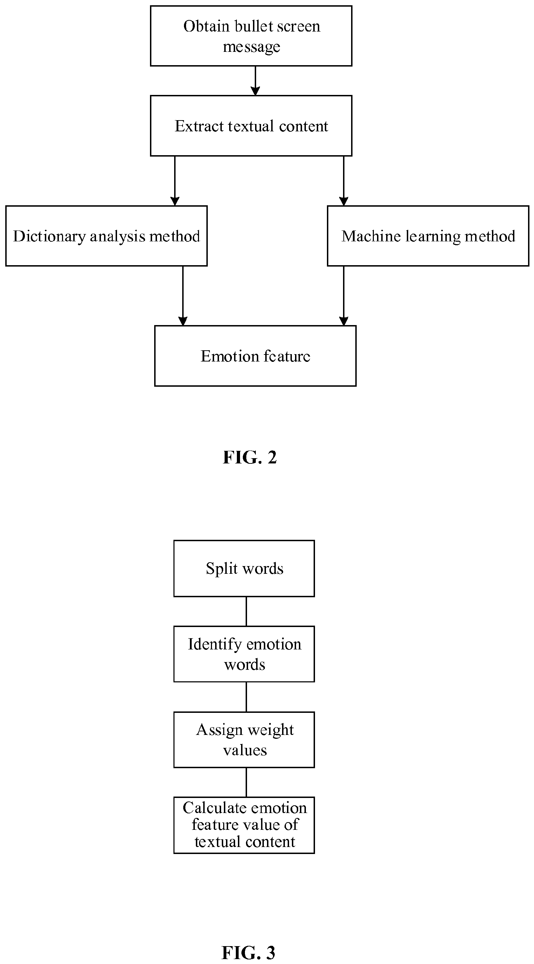

Referring to FIG. 2, in real applications, the emotion feature represented by the textual content may be identified by a dictionary analysis method or a machine learning method, respectively.

Specifically, referring to FIG. 3, when using the dictionary analysis method to identify the emotion feature represented by certain textual content, the textual content may be subjected to a word splitting process first, so that the textual content may be split into at least one word. After obtaining the split words, a part-of-speech annotation may be performed on each word to identify the emotion words in the at least one word. Specifically, an emotion-word dictionary may be predefined, and multiple sets of emotion words may be included in the dictionary. The meanings represented by the emotion words in each set of emotion words may be the same or similar. For example, emotion words such as "happy", "joyful", and "pleasant" may be in the same set. For another example, emotion words such as "angry", "trouble", and "sadness" may be in another set. In this way, by matching the words obtained from the splitting process with the emotion-word dictionary, the emotion words included in the at least one word obtained from the splitting process may be identified.

In the disclosed embodiments, since a piece of textual content may contain multiple emotion words, when identifying the emotion feature of the piece of textual content, it is necessary to comprehensively analyze the emotion features represented by the multiple emotion words respectively. Specifically, the emotion feature represented by the textual content may be identified in a quantitative manner. In the disclosed embodiments, a weight value may be assigned to each of the identified emotion words. In the emotion-word dictionary, different weight values may be assigned to each set in advance. For instance, a positive emotion word may be assigned a high emotion value, while a negative emotion word may be assigned a low emotion value. In this way, after the emotion words included in the textual content are identified, different weight values may be assigned to these emotion words according to a set to which each emotion word belongs.

Further, in some embodiments, the weight value of an emotion word may be comprehensively determined based on an intensity word and a negative word associated with the emotion word. For example, "I may see Zhang San here, I am very happy." In this textual content, "very" may be considered as an intensity word associated with the emotion word "happy". In this way, an intensity word associated with an emotion word may be identified from the textual content, and a weight value consistent with an intensity indicated by the intensity word may be assigned to the emotion word. To that end, intensity words may be pre-divided into different levels of intensity, so that a corresponding weight value may be assigned to an emotion word according to the intensity indicated by the identified intensity word. For example, the weight value of "happy" assigned to "a little happy" will be lower than the weight value of "happy" assigned to "very happy".

In some embodiments, considering that a negative word associated with an emotion word has a totally opposite emotion, it may be then determined whether an emotion word in the textual content has an associated negative word. If an emotion word has an associated negative word, a negative coefficient is assigned for the weight value of the emotion word. A product of the negative coefficient and the weight value is then considered as the actual weight value of the emotion word. For example, in the textual content "I am really not happy", there is a negative word "not" before the emotion word "happy". When assigning the weight value to the emotion word, a negative coefficient of -1 may be assigned to the weight value. In this way, after multiplying the negative coefficient by the weight value, a negative weight value is obtained, which then conforms to the emotion trend of the textual content.

In the disclosed embodiments, after the weight values are assigned to the respective emotion words, the emotion feature value of the textual content may be calculated. Specifically, the weight values of respective emotion words in the textual content may be added together to get the emotion feature value of the textual content.

In the disclosed embodiments, after the calculation of the emotion feature value of the textual content, an emotion feature corresponding to the emotion feature value may be considered as the emotion feature represented by the textual content. Specifically, different emotion features may have respective numerical intervals. For example, a numerical interval of 5 to 20 may indicate a "happy" emotion feature, while a numerical interval of -10 to -5 may indicate a "sad" emotion feature. In this way, a corresponding emotion feature may be determined according to the numerical interval in which the calculated emotion feature value falls.

In some embodiments, in order to improve accuracy of calculating the emotion feature value, the calculation may be performed on positive emotion words and negative emotion words, respectively. Specifically, after the emotion words are identified, the emotion words may be separated into positive emotion words and negative emotion words. When calculating the emotion feature value of the textual content, weight values may be first assigned to the positive emotion words and the negative emotion words, respectively. The process of weight value assignments may be similar to the aforementioned process, which will not be described again here. A positive emotion feature value and a negative emotion feature value for the textual content may be then respectively calculated based on the assigned weight values. Specifically, the weight value for each positive emotion word in the textual content may be added together to get the positive emotion feature value. Correspondingly, the weight value for each negative emotion word may be added together to get the negative emotion feature value. Finally, the emotion feature value of the textual content may be calculated based on the positive emotion feature value and the negative emotion feature value. Specifically, the sum of the positive emotion feature value and the negative emotion feature value may be considered as the emotion feature value of the textual content.

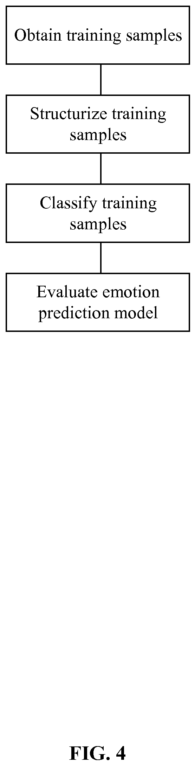

Referring to FIG. 4, the emotion feature of textual content may be also determined by machine learning. Specifically, an emotion prediction model may be trained in advance. When the emotion feature of current textual content needs to be identified, the textual content may be input into the emotion prediction model, and the result output from the emotion prediction model is considered as the emotion feature represented by the textual content.

In the disclosed embodiments, the emotion prediction model may be trained in a machine learning approach. Specifically, the emotion prediction model may serve as a classifier for positive emotions and negative emotions. In this way, the emotion prediction model may predict the corresponding emotion feature for input textual content. In the disclosed embodiments, a historical text training set may be obtained first. The historical text training set may include historical bullet screen texts posted by users, and each historical bullet screen text may be used as a training sample. When training the model, the emotion feature of a training sample itself is predetermined. The predetermined emotion feature may be a standard emotion feature associated with the training sample.

In the disclosed embodiments, a training sample may be input into an initial emotion prediction model to obtain a predicted emotion feature of the training sample. Here, the initial emotion prediction model may include an initialized neural network, and the neurons in the initialized neural network may have initial parameter values. Since these initial parameter values are set by default, after the input training sample is processed based on these initial parameter values, the obtained predicted emotion feature may be not consistent with the standard emotion feature actually reflected by the training sample. At this point, an error between the predicted emotion feature and the standard emotion feature may be determined. Specifically, the result predicted by the initial emotion prediction model may be a prediction probability set, and two probability values may be included in the prediction probability set. The two probability values respectively represent probabilities of the positive emotion and the negative emotion. The higher the probability value, the greater the possibility of the corresponding emotion feature. For example, if the predicted probability set is (0.1, 0.9), then the negative emotion corresponding to 0.9 may be the predicted emotion feature. A standard probability set corresponding to the standard emotion feature associated with a training sample may be, for example, (1, 0), where the probability value 1 may correspond to the positive emotion. Thus, by subtracting the probability values of a predicted probability set from the probability values of the corresponding standard probability set, an error between the predicted emotion feature and the standard emotion feature may be obtained. By inputting the error as feedback value(s) into the initial emotion prediction model, the parameters in the initial emotion prediction model may be adjusted. After the adjustment, the training sample may be re-input into the adjusted emotion prediction model. Afterwards, the process of using an error to adjust the parameters in a sub-model may be repeated, so that the eventually obtained predicted emotion feature is consistent with the standard emotion feature. In this way, the model is repeatedly trained through a large number of training samples, so that the eventual model obtained through the training process may have a relatively high prediction accuracy.

In some embodiments, in the process of training an emotion prediction model, for the input training samples, the emotion prediction model may perform a series of structurization processes, such as minimum semantic granularity recognition, text vectorization, term value assignment, and feature extraction, on the training samples, to extract feature vectors of the training samples. The feature vectors may be in a low-dimensional vector space. Since the training samples in reality are very complicated, these samples may not be distinguished by linear segmentation after vectorization. Therefore, a high-dimensional vector space may be used to solve the problem of linear indistinguishability in a low-dimensional vector space. At present, it has been proved by mathematical proof that a low-dimensional indistinguishability may be linearly distinguishable in a certain high dimension. Therefore, the aforementioned feature vectors may be converted to data of a specified dimension by a preset kernel function. The data of the specified dimension may be high-dimensional vector data. In real applications, the kernel function may be a function following mercy's law, which may convert low-dimensional data into high-dimensional data. For example, the kernel function may be a Gaussian kernel function.

In the disclosed embodiments, the emotion prediction model may determine a category corresponding to data of a specified dimension by using a preset classification hyperplane, thereby accomplishing the data classification process. In this way, the emotion feature represented by a determined category may be considered as the predicted emotion feature of a training sample.

In the actual classification, it often happens that a classification model has a relatively good classification performance on the training set but a poor classification performance on the test set due to the occurrence of noise. In order to avoid the interference of the noise, a slack variable may be introduced to blur the boundaries in the classification, so that the eventually obtained emotion prediction model may perform a correct classification even on the test set.

In some embodiments, after the emotion prediction model is obtained through the training process, the trained emotion prediction model may be evaluated using certain parameters. Based on the evaluation result, it may be determined whether the training process should be continued or not. Specifically, an evaluation message set may be obtained, and the evaluation message set may include a plurality of evaluation samples. The emotion prediction model may be used to predict the evaluation samples in the evaluation message set. By comparing the predicted results with real results, it may be determined whether the emotion prediction model predicts accurately or not. The actually predicted results may be divided into four likelihoods: 1. the real result is the positive emotion and the predicted result is the positive emotion, which is recorded as TP; 2. the real result is the positive emotion while the predicted result is the negative emotion, which is recorded as FN; 3. the real result is the negative emotion while the predicted result is the positive emotion, which is recorded as FP; 4. the real result is the negative emotion and the predicted result is the negative emotion, which is recorded as TN. In the disclosed embodiments, a precision parameter and a recall rate parameter may be calculated for the emotion prediction model based on the predicted results. The precision parameter and the recall rate parameter may be used to signify the prediction accuracy of the emotion prediction model. In real applications, the approach for calculating the precision parameter may be: TP/(TP+FP), and the approach for calculating the recall rate parameter may be: TP/(TP+FN). Eventually, the calculated parameter values may be compared to specified decision thresholds to determine whether or not to continue training the emotion prediction model.

S5: Determine an execution strategy matching the identified emotion feature, and process the bullet screen message according to the execution strategy.

In the disclosed embodiments, after identifying the emotion feature of the textual content, an execution strategy matching the identified emotion feature may be determined, and the bullet screen message is processed according to the execution strategy. Specifically, an execution strategy that matches the identified emotion feature includes at least one of: prohibiting a posting of bullet screen messages; or banning the IP address of a user who posts the current bullet screen message; limiting the frequency of posting bullet screen messages; or blocking emotion words that represent the negative emotion feature in the current bullet screen message; or send a notification message to the management server. In this way, when it is determined that the identified emotion feature is a negative emotion feature, a corresponding strategy may be executed, thereby effectively alleviating the tendency of bullet screen emotions in a live broadcast room.

In some embodiments, in addition to being able to detect current bullet screen messages, it is also possible to measure the bullet screen emotion trend in a live broadcast room. Specifically, historical bullet screen messages within a specified time period may be obtained for the live broadcast room. For each historical bullet screen message, an emotion feature value may be obtained. Then, the emotion feature values of the historical bullet screen messages may be fitted to obtain a historical fitting result for the specified time period. The historical fitting result may be a straight line obtained by the method of least squares. Apparently, in real applications, the historical fitting result may be also a curve. When the emotion trend represented by the historical fitting result meets specified criteria, it means that the emotion trend in the live broadcast room tends to be the negative emotion. At this moment, a preset strategy for limiting the posting of bullet screen messages may be executed. Here, when the emotion trend represented by the historical fitting result meets the specified criteria, it may mean that the slope of the historical fitting result is less than or equal to a specified slope threshold, where the slope of the historical fitting result indicates a degree of quickness of emotion change. In general, the slopes of negative emotions are negative values. The smaller the slope, the quicker the emotion change and the higher intendancy towards negative emotions. At this point, the bullet screen messages in a live broadcast room may be controlled by the preset strategies such as limiting of posting messages or playing interstitial advertisements.

### Embodiment 2

The present disclosure further provides a system for processing bullet screen messages, where the system includes:
a textual content extraction unit that is configured to obtain a current bullet screen message and extract to-be-analyzed textual content from the bullet screen message;
an emotion feature identification unit that is configured to identify an emotion feature represented by the textual content; and
a processing unit that is configured to determine an execution strategy that matches the identified emotion feature and process the bullet screen message according to the execution strategy.

In some embodiments, the emotion feature identification unit includes:
an emotion word identification module that is configured to split the textual content into at least one word, and identify emotion words in the at least one word; and
an emotion feature value calculation module that is configured to assign weight values to the emotion words and calculate an emotion feature value of the textual content according to the assigned weight values, where:
an emotion feature corresponding to the calculated emotion feature value is determined as the emotion feature represented by the textual content.

In some embodiments, the system further includes:
a word classification unit that is configured to classify the emotion words into positive emotion words and negative emotion words; and correspondingly, the emotion feature value calculation module includes:
a weight assignment module that is configured to assign weight values to the positive emotion words and the negative emotion words, respectively,
a feature value calculation module that is configured to respectively calculate a positive emotion feature value and a negative emotion feature value for the textual content based on the assigned weight values, and
a comprehensive calculation module that is configured to calculate the emotion feature value of the textual content based on the positive emotion feature value and the negative emotion feature value.

In some embodiments, the emotion feature identification unit includes:
an emotion prediction module that is configured to input the textual content into an emotion prediction model and determine a result output from the emotion prediction model as the emotion feature represented by the textual content;
where the emotion prediction model is trained by:
obtaining a historical text training set, where training samples in the historical text training set are associated with standard emotion features;
inputting the training samples into an initial emotion prediction model to obtain predicted emotion features of the training samples; and
determining errors between the predicted emotion features and the standard emotion features, and adjusting parameters in the initial emotion prediction model based on the errors, to allow the predicted emotion features to be consistent with the standard emotion features when the training samples are re-input into the adjusted emotion prediction model.

As can be seen from the above, the technical solutions provided by the present disclosure may detect the emotion feature of a bullet screen message when detecting the bullet screen messages. Specifically, the emotion feature of a bullet screen message may be detected by two approaches: emotion word matching or emotion prediction model. Here, when the emotion word matching-based approach is used for detection, the textual content of a bullet screen message may be split into multiple words, and emotion words may be identified from the split words. Each emotion word may be then assigned a weight value, so that the emotion feature value of the textual content may be obtained. An emotion feature corresponding to the emotion feature value may be the emotion feature represented by the bullet screen message. When the emotion prediction model-based approach is used for detection, the emotion prediction model may be trained through a large number of training samples. When a bullet screen message needs to be detected, the textual content of the bullet screen message may be input into the emotion prediction model, and the output result may be considered as the emotion feature represented by the bullet screen message. It can be seen from the above that, by analyzing the emotion features of bullet screen messages, the present disclosure may detect bullet screen messages with negative emotions, thereby improving accuracy of the detection of undesirable bullet screen messages.

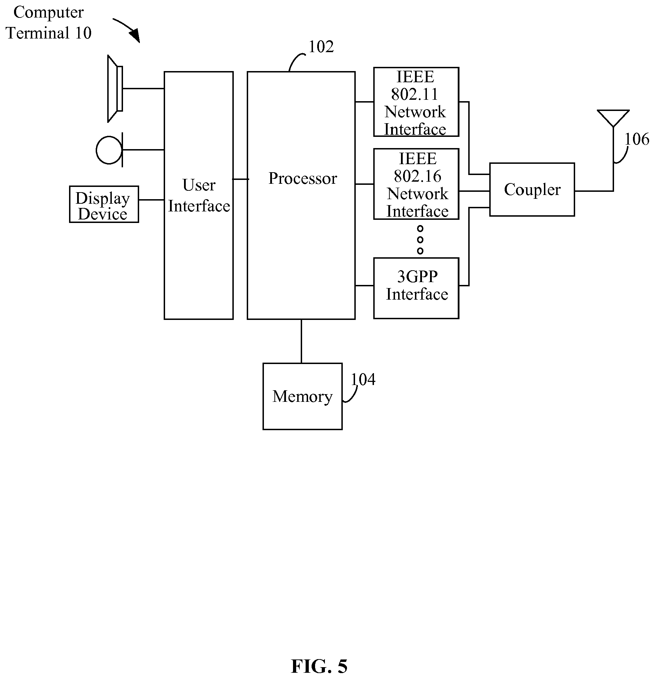

Referring to FIG. 5, in the present disclosure, the technical solutions of the disclosed embodiments may be applied to a computer terminal 10 shown in FIG. 5. The computer terminal 10 may include one or more (only one is shown in the figure) processors 102 (a processor 102 may include, but is not limited to, a processing device such as a microcontroller MCU or a programmable logic device FPGA), a memory 104 for storing data, and a transmission device 106 for communication purpose. It will be understood by those skilled in the art that the structure shown in FIG. 5 is provided by way of illustration, but not by way of limitation of the structures of the above-described electronic devices. For example, the computer terminal 10 may also include more or fewer components than those shown in FIG. 5, or have a different configuration than that shown in FIG. 5.

The memory 104 may be used to store software programs and modules of application software. The processor 102 implements various functional applications and data processing by executing software programs and modules stored in the memory 104. The memory 104 may include a high-speed random access memory, and a non-volatile memory, such as one or more magnetic storage devices, flash memory, or other non-volatile solid-state memory. In some applications, the memory 104 may further include a memory remotely disposed with respect to the processor 102, which may be connected to the computer terminal 10 through a network. Examples of such network may include, but are not limited to, the Internet, an intranet, a local area network, a mobile communication network, and combinations thereof.

The transmission device 106 is configured to receive or transmit data via the network. The aforementioned specific examples of the network may include a wireless network provided by the communication provider of the computer terminal 10. In one application, the transmission device 106 includes a network interface controller (NIC). The transmission device 106 may be connected to other network devices through the base stations, so as to communicate with the Internet. In another application, the transmission device 106 may be a Radio Frequency (RF) module that is configured to communicate with the Internet via a wireless approach.

Through the foregoing description of the disclosed embodiments, it is clear to those skilled in the art that the various embodiments may be implemented in the form of software with a necessary general hardware platform, or implemented in the form of hardware. In light of this understanding, the above technical solutions, or essentially the parts that contribute to the existing technologies, may take the form of software products. The computer software products may be stored in a computer-readable storage medium, such as a ROM/RAM, a magnetic disk, or an optical disc, that includes a set of instructions to direct a computing device (may be a personal computer, a server, or a network device, etc.) to implement each disclosed embodiment or part of the described methods of the disclosed embodiments.

Although the present disclosure has been described as above with reference to some preferred embodiments, these embodiments should not be constructed as limiting the present disclosure. Any modifications, equivalent replacements, and improvements made without departing from the spirit and principle of the present disclosure shall fall within the scope of the protection of the present disclosure.

## Claims

1. A method for processing bullet screen messages, comprising:
obtaining a current bullet screen message, and extracting to-be-analyzed textual content from the current bullet screen message;
identifying an emotion feature represented by the textual content; and
determining an execution strategy matching the identified emotion feature, and processing the current bullet screen message according to the execution strategy.

2. The method according to claim 1, wherein identifying the emotion feature represented by the textual content includes:
splitting the textual content into at least one word, and identifying emotion words from the at least one word;
assigning weight values for the emotion words, and calculating an emotion feature value of the textual content based on the assigned weight values; and
determining an emotion feature corresponding to the calculated emotion feature value as the emotion feature represented by the textual content.

3. The method according to claim 2, wherein assigning the weight values for the emotion words further includes:
identifying an intensity word associated with an emotion word from the textual content, and assigning a weight value, for the emotion word, that matches an intensity **characterized by** the intensity word.

4. The method according to claim 2 or 3, after assigning the weight values for the emotion words, the method further includes:
determining whether the emotion word has an associated negative word in the textual content; and
if the emotion word has an associated negative word, assigning a negative coefficient for the weight value of the emotion word, and determining a product of the negative coefficient and the weight value of the emotion word as an actual weight value of the emotion word.

5. The method according to claim 2, after identifying the emotion words, the method further includes:
classifying the emotion words into positive emotion words and negative emotion words; and
wherein assigning the weight values for the emotion words, and calculating the emotion feature value of the textual content based on the assigned weight values include:
assigning weight values for the positive emotion words and the negative emotion words, respectively,
calculating a positive emotion feature value and a negative emotion feature value of the textual content based on the assigned weight values for the positive emotion words and the negative emotion words, respectively, and
calculating the emotion feature value of the textual content based on the positive emotion feature value and the negative emotion feature value.

6. The method according to claim 1, wherein identifying the emotion feature represented by the textual content includes:
inputting the textual content into an emotion prediction model, and determining a result output from the emotion prediction model as the emotion feature represented by the textual content.

7. The method according to claim 6, wherein the emotion prediction model is trained by:
obtaining a historical text training set, wherein training samples in the historical text training set are associated with standard emotion features;
inputting a training sample into an initial emotion prediction model to obtain a predicted emotion feature of the training sample; and
determining an error between the predicted emotion feature and a standard emotion feature and adjusting parameters in the initial emotion prediction model based on the error, to allow the predicted emotion feature to be consistent with the standard emotion feature when the training sample is re-input into the adjusted emotion prediction model.

8. The method according to claim 7, when training the emotion prediction model, the method further includes:
extracting a feature vector of the training sample, and converting the feature vector into data of a specified dimension by a preset kernel function; and
determining a category corresponding to the data of the specified dimension by using a preset classification hyperplane, and determining an emotion feature associated with the determined category as the predicted emotion feature of the training sample.

9. The method according to claim 6, after the emotion prediction model is obtained through the training process, the method further includes:
obtaining an evaluation message set, and using the emotion prediction model to predict evaluation samples in the evaluation message set; and
calculating, according to predicted results, a precision parameter and a recall rate parameter of the emotion prediction model, wherein the precision parameter and the recall rate parameter are used to signify a prediction accuracy of the emotion prediction model.

10. The method according to claim 1, further comprising:
obtaining historical bullet screen messages within a specified time period, and fitting emotion feature values of the historical bullet screen messages to obtain a historical fitting result of the specified time period; and
when an emotion trend represented by the historical fitting result meets specified criteria, executing a preset strategy for limiting of posting bullet screen messages.

11. The method according to claim 10, wherein the emotion trend represented by the historical fitting result meeting the specified criteria includes:
a slope of the historical fitting result being less than or equal to a specified slope threshold.

12. The method according to claim 1, wherein the execution strategy matching the identified emotion feature includes at least one of:
prohibiting a posting of bullet screen messages;
banning an IP address of a user posting the current bullet screen message;
limiting a frequency of posting the bullet screen messages;
blocking an emotion word that represents a negative emotion feature in the current bullet screen message; and
sending a notification message to a management server.

13. A system for processing bullet screen messages, comprising:
a textual content extraction unit that is configured to obtain a current bullet screen message and extract to-be-analyzed textual content from the bullet screen message;
an emotion feature identification unit that is configured to identify an emotion feature represented by the textual content; and
a processing unit that is configured to determine an execution strategy that matches the identified emotion feature and process the bullet screen message according to the execution strategy.

14. The system according to claim 13, wherein the emotion feature identification unit includes:
an emotion word identification module that is configured to split the textual content into at least one word, and identify emotion words in the at least one word; and
an emotion feature value calculation module that is configured to assign weight values to the emotion words and calculate an emotion feature value of the textual content according to the assigned weight values, wherein:
an emotion feature corresponding to the calculated emotion feature value is determined as the emotion feature represented by the textual content.

15. The system according to claim 14, further comprising:
a word classification unit that is configured to classify the emotion words into positive emotion words and negative emotion words;
wherein the emotion feature value calculation module further includes:
a weight assignment module that is configured to assign weight values to the positive emotion words and the negative emotion words, respectively,
a feature value calculation module that is configured to respectively calculate a positive emotion feature value and a negative emotion feature value for the textual content based on the assigned weight values, and
a comprehensive calculation module that is configured to calculate the emotion feature value of the textual content based on the positive emotion feature value and the negative emotion feature value.

16. The system according to claim 13, wherein the emotion feature identification unit includes:
an emotion prediction module that is configured to input the textual content into an emotion prediction model and determine a result output from the emotion prediction model as the emotion feature represented by the textual content;
wherein the emotion prediction model is trained by:
obtaining a historical text training set, wherein training samples in the historical text training set are associated with standard emotion features,
inputting a training sample into an initial emotion prediction model to obtain a predicted emotion feature of the training sample, and
determining an error between the predicted emotion feature and a standard emotion feature and adjusting parameters in the initial emotion prediction model based on the error, to allow the predicted emotion feature to be consistent with the standard emotion feature when the training sample is re-input into the adjusted emotion prediction model.
